# FASCICULE DE BREVET EUROPEEN

(11) **EP 0 796 763 B1**
(45) Date de publication et mention de la délivrance du brevet: **05.07.2000**
(21) Numéro de dépôt: 97870038.3
(22) Date de dépôt: 18.03.1997
(51) Int. Cl.: B60R 9/042

(54) **Porte-échelle pour véhicule**
Leiterträger für Fahrzeuge
Ladder carrier for vehicle

(30) Priorité: 20.03.1996 BE 9600249
(43) Date de publication de la demande: 24.09.1997
(73) Titulaire: Ballez, François, 7000 Mons (BE)
(72) Inventeur: Ballez, François, 7000 Mons (BE)
(74) Mandataire: Kuborn, Jacques

(56) Documents cités:
- EP-A- 0 461 709
- BE-A- 1 007 147
- FR-A- 2 689 073

## Description

La présente invention concerne un dispositif de chargement et de manutention d'objets allongés sur le toit d'un véhicule, dispositif que l'on désignera plus généralement ci-après par porte-échelle.

Plus particulièrement, l'invention concerne un porte-échelle du type divulgué dans le document BE-B-1007147, comprenant un berceau mobile, prévu pour porter l'échelle ou analogue et fixé à pivotement à une partie fixe arrimée au véhicule.

Selon le document BE-B-1007147, le berceau mobile peut pivoter autour d'un axe, par rapport à un cadre fixe, entre une position de transport sensiblement horizontale, et une position de chargement/déchargement inclinée sur l'horizontale.

Dans ce type de dispositif à cadre pivotant, un problème qui se pose est la sensibilité de la structure, et particulièrement de l'axe de pivotement, à la flexion, compte tenu des bras de levier en jeu lorsqu'une échelle est manipulée, tandis que la structure doit d'autre part être la plus légère possible, pour minimiser le poids mort transporté.

Selon l'invention, on se propose de résoudre ce problème, et de permettre en même temps un pivotement du berceau mobile essentiellement sur 90°, entre la position de transport sensiblement horizontale, et une position de chargement/déchargement sensiblement verticale.

Par position de transport "sensiblement horizontale", on entend que l'axe longitudinal du berceau mobile est essentiellement horizontal, dans cette position; le plan du cadre dans cette position ne sera cependant généralement pas vertical, mais sera de préférence incliné vers le centre du véhicule, pour la stabilité des objets transportés.

Par position de chargement/déchargement "sensiblement verticale", on entend d'autre part que l'axe longitudinal du berceau mobile est sensiblement perpendiculaire à l'horizontale dans cette position, étant entendu que le plan du berceau sera généralement incliné vers le véhicule, pour assurer la stabilité.

Selon l'invention, on se propose de résoudre le problème ci-dessus, essentiellement en fournissant un cadre pivotant articulé à une structure fixe par une articulation à deux degrés de liberté, et donc insensible à la flexion, et en guidant la course de pivotement du berceau mobile à l'aide d'une tringle articulée, par une structure triangulée.

Un but de l'invention est donc de fournir un porte-échelle du type comprenant un cadre fixe, prévu pour être arrimé au toit d'un véhicule, un berceau mobile, prévu pour supporter une échelle ou analogue, un moyen de liaison à pivotement, pour relier à pivotement le berceau mobile au cadre fixe, entre une position de transport sensiblement horizontale et une position de chargement/déchargement inclinée par rapport à l'horizontale, et des moyens de blocage et de maintien du berceau mobile dans chacune desdites positions de transport et de chargement/déchargement, caracterisé en ce que le moyen de liaison à pivotement est constitué d'une articulation à deux degrés de liberté, reliant le berceau mobile au cadre fixe, et d'une tringle de guidage fixée par ses extrémités, d'une part au cadre fixe et d'autre part au berceau mobile, à distance de l'articulation de pivotement, chaque fois par une articulation à deux degrés de liberté.

Selon d'autres caractéristiques de l'invention: le point de fixation de l'articulation d'au moins une extrémité de la tringle est ajustable en position; la longueur de la tringle est ajustable; les moyens de blocage sont constitués par une tringle de blocage fixée par une extrémité au berceau mobile, par une articulation à deux degrés de liberté; l'autre extrémité de la tringle de blocage est prévue pour être fixée de manière libérable au véhicule; le porte-échelle comprend de plus un organe d'appui du berceau mobile sur le cadre fixe, dans chacune de ses positions extrêmes.

D'autres aspects, caractéristiques et avantages de l'invention apparaîtront de la description qui suit, et des dessins annexés sur lesquels:
La figure 1 est une vue en perspective schématique, éclatée, du porte-échelle de l'invention,
La figure 2 est un schéma des liaisons mécaniques,
La figure 3 est une vue d'un détail du berceau mobile,
La figure 4 est une vue de détail, en perspective, du berceau, montrant des organes de blocage additionnels.

En se reportant au dessin, le porte-échelle 1 comprend de manière générale une partie fixe, prévue pour être arrimée au véhicule, schématisé en 2, et recevoir à pivotement un berceau mobile destiné à recevoir l'échelle ou analogue.

Dans le mode de réalisation représenté, la partie fixe du dispositif est constituée de deux barres 3, 4 arrimées au véhicule par des pattes 5, 6. Les barres se prolongent vers l'extérieur en 3', 4' au delà des pattes 5, 6, et portent à leur extrémité un longeron 7, auquel est fixée la partie femelle 8 d'une articulation à rotule 8, 9.

Il va cependant de soi que la partie de fixation au véhicule, constituée essentiellement des éléments 3, 4, 3', 4' et 5, 6 n'est pas caractéristique de l'invention, mais est plutôt spécifique au véhicule concerné, et sera chaque fois adapté en fonction des circonstances.

La partie, ou berceau mobile du porte-échelle comprend un cadre pivotant 10 prévu pour recevoir une échelle ou analogue, non représentée, et est constituée de deux montants 12, 13, reliés à intervalle par des entretoises 14.

Le cadre 10 porte la partie mâle 9 de l'articulation 8, 9, et est articulé en 15 à une tringle 16 dont l'autre extrémité est articulée en 17 sur la partie fixe du dispositif.

Tout comme l'articulation 8, 9, les articulations 15 et 17 sont également des articulations à deux degrés de liberté, de préférence des articulations à rotule comme l'articulation 8, 9.

L'articulation 15 est portée par une entretoise 14', montée entre deux entretoise 14, tandis que l'articulation 17 est portée par une entretoise 18 montée entre les deux barres 3, 4.

Comme on le comprendra, la fonction de la tringle 16 est de guider dans sa course de pivotement le cadre 10, tout en résistant aux couples de flexion dirigés hors du plan du cadre, et résultant de la manipulation du cadre ou de l'échelle.

On réalise ainsi un système pivotant triangulé, dont l'un des bras est constitué par la portion du cadre 10 comprise entre les articulations 8,9 et 15, dont un autre bras est constitué par la tringle 16, et dont le troisième bras - imaginaire - est constitué par la distance, également fixe, séparant l'articulation 17 de l'articulation 8,9.

Lors du pivotement du cadre 10, l'articulation 15 parcourt dès lors une portion d'un arc qui est l'un des lieux d'intersection de deux surfaces sphériques, l'une ayant pour centre l'articulation 17, et pour rayon la longueur de la tringle 16, et l'autre ayant pour centre l'articulation 8,9 et pour rayon la distance entre l'articulation 8,9 et l'articulation 15.

Dans une telle liaison triangulée à trois côtés fixes, rigides, il est utile de prévoir une possibilité de réglage pour permettre d'ajuster les deux positions extrêmes, à savoir la position verticale, de chargement/déchargement, et la position horizontale de transport.

Pour ce faire, on peut prévoir une possibilité de réglage de la longueur de la tringle 16, en la réalisant par exemple en deux parties assemblées l'une à l'autre de manière télescopique, avec possibilité de blocage en position ajustée.

On peut également prévoir une possibilité de réglage de la position de l'une ou l'autre des articulations 15 et 17, ou des deux.

Au dessin, on a schématisé la possibilité de réglage de l'articulation 17 par des logements 19 traversant l'entretoise 18, et des logements 20 traversant les barres 3, 4. Ceci permet de fixer l'articulation 17, dans diverses positions le long de l'entretoise 18, et de fixer cette dernière dans diverses positions le long des barres 3, 4, assurant ainsi une possibilité de réglage dans deux directions orthogonales.

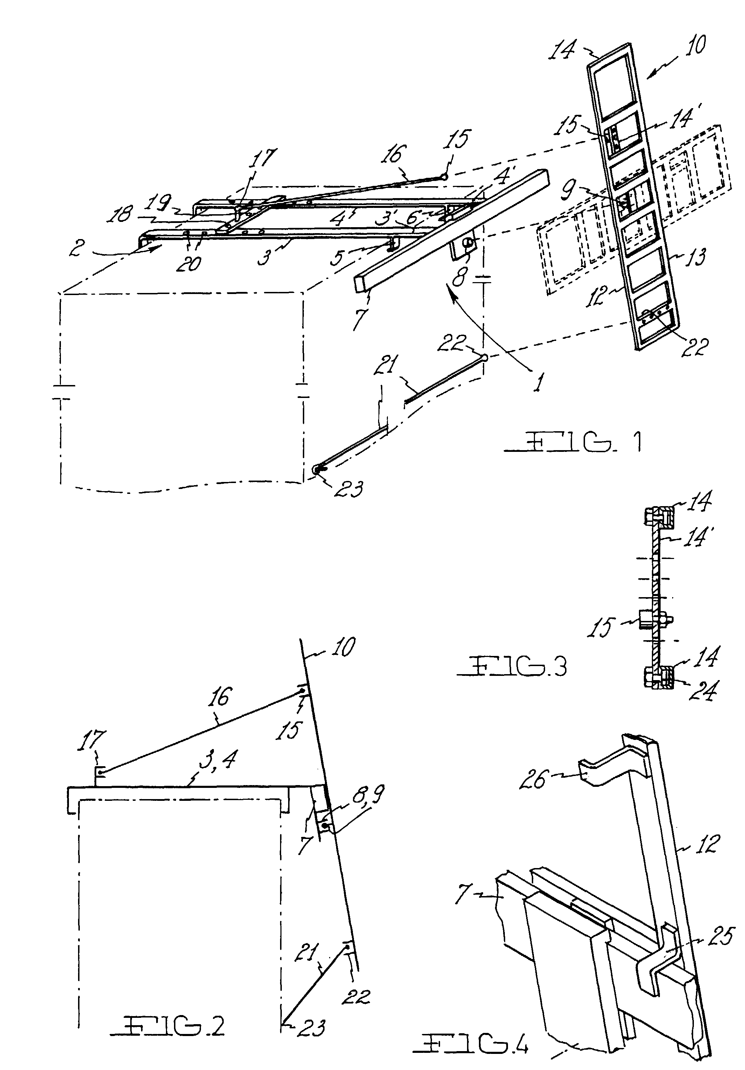

De même, l'entretoise 14' est percée de plusieurs logements, et est montée à coulissement sur les entretoises 14 réalisées sous la forme de profilés creux fendus, comme on le voit mieux à la figure 3, avec possibilité de blocage en position par des éléments filetés 24.

De tels dispositifs d'ajustement, et d'autres équivalents sont connus dans la technique, et ne doivent pas être décrits plus en détail ici.

Le longeron 7 sert bien sûr à fixer la partie femelle 8 de l'articulation 8,9; de préférence, il sert également d'appui pour le berceau mobile 10, aussi bien dans ses positions extrêmes qu'au cours de sa course de pivotement. En effet, le plan du berceau 10 peut, au cours de ce déplacement, pivoter autour d'un axe passant par les articulations 8, 9 et 15, et donc s'appuyer par l'un de ses montants 12, 13 sur le longeron 7.

Le dispositif de l'invention comprend encore une tringle de maintien 21, articulée en 22 sur le berceau mobile 10, et fixée de manière détachable en 23 au véhicule.

La tringle 21 sert à maintenir le berceau mobile, aussi bien dans la position de transport que dans la position dressée, et elle peut également servir à l'opérateur pour contrôler le pivotement du berceau mobile, une fois qu'elle a été détachée.

La longueur de la tringle 21, et son point de fixation 23 au véhicule seront bien sûr choisis pour que le point d'articulation 22 se trouve sur le cercle ayant pour centre le point 23 et pour rayon le longueur de la tringle 21, dans les deux position extrêmes de pivotement.

La liaison assurée par la tringle 21 est hyperstatique; dans cette mesure, elle devra de préférence être ajustable en longueur, pour tenir compte des tolérances, ainsi que des dilatations/déformations éventuelles.

Ce réglage peut se faire sur le point d'articulation 22 au berceau, par une fixation du même type que celles prévues pour les articulations 15 et 17, ou mieux par ajustement de la longueur de la tringle 21. Celle-ci peut par exemple être télescopique, éventuellement avec ajustement automatique sous l'influence d'un fort ressort.

Comme on le comprendra, le mouvement de pivotement du cadre 10 est un mouvement complexe qui ne se fait pas dans un plan; seules comptent ici les deux positions extrêmes, verticale et horizontale, et les réglages de la tringle 16 et de ses points d'articulation 15, 17 seront faits pour que le berceau 10 se dispose suivant l'inclinaison souhaitée en position verticale, et sensiblement parallèle au longeron, et de préférence en appui sur lui, en position horizontale.

Grâce à la liaison mécanique triangulée, associant stabilité et légèreté, on a ainsi atteint le but recherché, à savoir d'assurer le pivotement sur 90° d'une structure légère, soumise à des couples de flexion importants, en protégeant l'articulation de pivotement vis-à-vis de ces couples de flexion.

L'articulation à rotule 8, 9 est robuste, et peut facilement être surdimensionnée, pour tenir compte des sévères conditions de fonctionnement, sans notablement alourdir la structure.

Bien que cela ne soit pas représenté au dessin, il est entendu que l'articulation 8, 9 sera de préférence également ajustable en position par rapport au berceau 10, par exemple par une fixation du même type que celle de l'articulation 15, ou analogue.

Le berceau 10 peut encore être pourvu latéralement de rambardes ou appui analogues, pour faciliter le positionnement et le maintien de l'échelle.

On peut encore prévoir sur le berceau 10 des éléments d'appui sur le longeron, dans les deux positions extrêmes, comme indiqué en 25 et 26 à la figure 4.

Enfin, les articulations ont été décrites comme des articulations à rotules, qui constituent des articulations simples et robustes, à deux degrés de liberté. L'invention n'est cependant pas limitée à cela, et on peut utiliser tout autre type d'articulation à deux degrés de liberté, tels que des articulations à la Cardan, ou analogues. S'agissant de systèmes mécaniques simples et relativement peu précis, ces articulations peuvent au besoin avoir du jeu.

## Revendications

1. Porte-échelle du type comprenant
un cadre fixe (3, 4), prévu pour être arrimé au toit d'un véhicule,
un berceau mobile (10), prévu pour supporter une échelle ou analogue,
un moyen de liaison à pivotement (8, 9), pour relier à pivotement le berceau mobile au cadre fixe, entre une position de transport sensiblement horizontale et une position de chargement/déchargement inclinée par rapport à l'horizontale, et
des moyens de blocage (21) et de maintien du berceau mobile dans chacune desdites positions de transport et de chargement/déchargement
caracterisé en ce que
le moyen de liaison à pivotement est constitué d'une articulation (8, 9) à deux degrés de liberté, reliant le berceau mobile (10) au cadre fixe, et d'une tringle de guidage (16) fixée par ses extrémités, d'une part au cadre fixe et d'autre part au berceau mobile (10), à distance de l'articulation de pivotement (8, 9), chaque fois par une articulation à deux degrés de liberté (15, 17).

2. Porte-échelle selon la revendication 1, caractérisé en ce que le point de fixation de l'articulation (15, 17) d'au moins une extrémité de la tringle (16) est ajustable en position.

3. Porte-échelle selon la revendication 1 ou 2, caractérisé en ce que la longueur de la tringle (16) est ajustable.

4. Porte-échelle selon l'une quelconque des revendications 1 à 3 caractérisé en ce que les moyens de blocage sont constitués par une tringle de blocage (21) fixée par une extrémité au berceau mobile (10), par une articulation (22) à deux degrés de liberté.

5. Porte-échelle selon la revendication 4, caractérisé en ce que l'autre extrémité (23) de la tringle de blocage (22) est prévue pour être fixée de manière libérable au véhicule.

6. Porte-échelle selon l'une quelconque des revendications 1 à 5, caractérisé en ce qu'il comprend de plus un organe d'appui (25, 26) du berceau mobile (10) sur le cadre fixe, dans chacune de ses positions extrêmes.

## Patentansprüche

1. Leiterträger der Art, das er
einen festen Rahmen (3, 4), der dafür vorgesehen ist, auf dem Dache eines Fahrzeugs befestigt zu werden,
ein verstellbares Gestell (10) zur Aufnahme einer Leiter oder dergleichen,
ein verschwenkbares Verbindungsmittel (8, 9), um das verstellbare Gestell mit dem festen Rahmen verschwenkbar zwischen einer etwa horizontalen Transportstellung und einer bezüglich zur horizontalen geneigten Lade/Abladestellung zu verbinden, und
Mittel (21) zum Blockieren und zur Halterung des mobilen Gestells in der jeweiligen Transport- und Lade/Abladestellung, umfasst,
dadurch gekennzeichnet, dass
das verschwenkbare Verbindungsmittel aus einem Gelenk (8, 9) mit zwei Freiheitsgraden besteht, welches das mobile Gestell (10) mit dem festen Rahmen verbindet, und aus einer Führungsstange (16) besteht, die an ihren Enden jeweils mit einem Gelenk (15, 17) mit zwei Freiheitsgraden einerseits an dem festen Rahmen und andererseits an dem mobilen Gestell (10) im Abstand zum Verschwenkgelenk (8, 9) befestigt ist.

2. Leiterträger gemäß Anspruch 1, dadurch gekennzeichnet, dass der Befestigungspunkt des Gelenks (15, 17) von mindestens einem Ende der Stange (16) in seiner Lage verstellbar ist.

3. Leiterträger gemäß Anspruch 1 oder 2, dadurch gekennzeichnet, dass die Länge der Stange (16) verstellbar ist.

4. Leiterträger gemäß einem der Ansprüche 1 bis 3, dadurch gekennzeichnet, dass die Mittel zum Blockieren durch eine an einem Ende an dem mobilen Gestell (10) durch ein Gelenk (22) mit zwei Freiheitsgraden befestigte Blockierstange (21) gebildet werden.

5. Leiterträger gemäß Anspruch 4, dadurch gekennzeichnet, dass das andere Ende (23) der Blockierstange (22) dazu ausgebildet ist, es lösbar an dem Fahrzeug zu befestigen.

6. Leiterträger gemäß einem der Ansprüche 1 bis 5, dadurch gekennzeichnet, dass der Leiterträger zum Abstützen des mobilen Gestells (10) in jeder seiner Endlagen auf dem befestigten Rahmen zusätzlich ein Element (25, 26) zum Abstützen umfasst.

## Claims

1. A ladder carrier of the kind comprising
a fixed frame (3, 4) intended to be secured on a vehicle roof,
a moveable support (10) intended to carry a ladder or similar,
pivotal connection means (8, 9) for pivotably connecting the moveable support with the fixed frame, between a substantially horizontal transport position and a loading/unloading position which is tilted in relation to the horizontal, and
means (21) for locking and holding the moveable support in each of said transport and loading/unloading positions,
characterized in that
the pivotal connection means includes a link (8, 9) having two degrees of freedom, connecting the moveable support (10) to the fixed frame, and a guide rod (16) which is attached at the.ends thereof, on the one hand to the fixed frame and on the other hand to the moveable support (10) at a distance from the pivotal link(8, 9), by means of a respective link (15, 17) having two degrees of freedom.

2. A ladder carrier according to claim 1, characterized in that the position of the attachment point of the link (15, 17) on at least one end of the rod (16) is adjustable.

3. A ladder carrier according to claim 1 or 2, characterized in that the length of the rod (16) is able to be adjustable.

4. A ladder carrier according to anyone of claims 1 to 3, characterized in that the locking means include a locking rod (21) which is attached to the moveable support (10) at one end thereof through a link (22) having two degrees of freedom.

5. A ladder carrier according to claim 4, characterized in that the other end (23) of the locking rod (22) is designed to be detachably secured to the vehicle.

6. A ladder carrier according to anyone of claims 1 to 5, characterized in that it further comprises a support member (25, 26) for supporting the moveable support (10) on the fixed frame in each of the limit positions thereof.
